# EUROPEAN PATENT SPECIFICATION

(11) **EP 1 091 912 B1**
(45) Date of publication and mention of the grant of the patent: **11.12.2002**
(21) Application number: 99917054.1
(22) Date of filing: 19.04.1999
(51) Int. Cl.: C03B 9/33, C03B 9/31, C03B 11/14

(54) **METHOD AND APPARATUS FOR AUTOMATICALLY MANUFACTURING GLASS CONTAINERS WITH FEET, BASES OR OTHER DECORATIVE ELEMENTS**
VERFAHREN UND VORRICHTUNG ZUR AUTOMATISCHEN HERSTELLUNG VON GLASCONTAINERN MIT FUSS, BODEN ODER ANDEREN DEKORATIVEN ELEMENTEN
PROCEDE DE FABRICATION AUTOMATIQUE DE RECIPIENTS EN VERRE COMPRENANT DES PIEDS, DES BASES OU D'AUTRES ELEMENTS DECORATIFS ET APPAREIL POUR SA EXECUTION

(30) Priority: 23.04.1998 IT PR980022
(43) Date of publication of application: 18.04.2001
(73) Proprietor: Bormioli Rocco & Figlio S.p.A., 43100 Parma (PR) (IT)
(72) Inventor: DI GIUSEPPANTONIO, Vincenzo, I-43036 Fidenza (IT)
(74) Representative: Gotra, Stefano
(86) International application number: IT9900094
(87) International publication number: WO99054260

(56) References cited:
- WO-A-99/26889
- GB-A- 688 876
- US-A- 1 911 119
- US-A- 1 996 910

## Description

### TECHNICAL FIELD AND BACKGROUND ART.

The present invention relates to a method and an apparatus for automatically manufacturing glass containers, in particular containers with a narrow mouth or a mouth having fastening means for lids or closures in general or containers with wide mouths, such as jugs with or without a spout, vases or containers with or without handles.

Techniques are already known for obtaining, from a single gob of glass, containers which have narrow mouths or are provided with internal or partial threading or collars for fastening metal closing lids, atomizers, small pumping devices or other closing elements which require extreme precision of the container neck.

The same techniques are used in order to produce wide-mouth containers which must have predefined shapes and dimensions which do not require subsequent machining operations such as cracking-off or fire-polishing of the edge.

Said known techniques essentially consist of processes which are performed by machines referred to, in technical jargon, as "I.S." (individual section) machines.

There are two types of process which can be performed with said machines: a first type involves the formation of a parison (preliminary moulded piece from which the glass article must be formed) by means of pressing of a gob in a blank mould.

A second type of machine involves formation of the parison using blown compressed air. In both cases the parison is formed with the neck downwards and is transferred by means of overturning through 180° into the final finishing station where final moulding of the container is again performed by means of blowing. With the techniques briefly described above it is not possible to obtain containers with externally applied elements or decorations, in particular support bases, supporting stems with feet, with applied elements which surround totally or partially the base of the container or partially or totally line the container body.

Machines of the carousel type which also perform processing steps such as those performed in I.S. machines have also been developed, said machines producing articles with the same characteristics.

In the past, methods for producing articles with decorations applied as described above have been developed. As can be noted from the following patents: FR 553 943 A, DE 742457 C, US 1,647,175 A, CH 362,803 A, US 2,269,010 A, the methods used all refer to manual or semi-automatic production methods.

Moreover from US-A-1 996 910 a method and an apparatus are known for applying a decoration to glassware. The decoration could be of a colour different from that of the body of the glassware.

In carrying out the method disclosed, the body of the glass container may be formed by pressing or blowing. Then the container, set in an inverted position, is confined in a mould and a receiver is provided for receiving the molten glass with which the container is to be decorated. A plunger, entering the receiver, forces or extrudes the molten glass through gates into the mould where the glass comes into contact with a portion of the container.

After the glass has chilled, the sprue made by the glass in the gates, is broken and the rough place formed by the breaking away of the sprue is smoothed off. After the extruding operation has been finished, a body of glass will remain inside the receiver and this has to be taken out and can be remelted. The mould and the receiver provide a mould unit which forms the cavity in which the glass is forced or extruded.

### DISCLOSURE OF INVENTION.

The object of the present invention is that of providing containers with a narrow mouth or wide mouth or one which is in any case precision-made so as to allow the fastening, if necessary, of means for closing the container itself, in which the body and/or base of the container are surrounded totally or partially by applied decorative glass elements of the same or a different colour or in which feet or decorative inserts are applied onto the external bottom of the base.

These and other objects are fully achieved by the method according to claim 1 and the apparatus according to claim 2.

The method according to the present invention has the advantage that the output and the production capacity and the final cost of the product make the whole system extremely competitive compared to the techniques previously disclosed in the patents described above.

In particular with respect to known methods as above disclosed in which the glass is extruded through gates so that it is needed to sever excess glass or sprue and, as a consequence, it is needed to smooth the base of the container thus obtained, the present invention provides a method in which the glass is pressed in the mould so that after the pressing step the container is a finished product.

### BRIEF DESCRIPTION OF DRAWINGS.

Characteristic features and advantages will emerge more clearly from the following description of a preferred sequence of the manufacturing steps illustrated, purely by way of a non-limiting example, in the accompanying plates of drawings, in which:
- Figures 1 to 7 illustrate the sequences for obtaining a container, shown in Figure 8, in the form of a small bottle with a narrow precision-made neck and with decoration on the bottom;
- Figures 9, 10, 12, 13, 14 and 15 show containers according to a further embodiment;
- Figure 11 shows, in schematic form, a production line in its entirety which performs the sequence of process steps.

### BEST MODE FOR CARRYING OUT THE INVENTION.

With reference to the Figures, the method which comprises in combination a series of steps is now described.

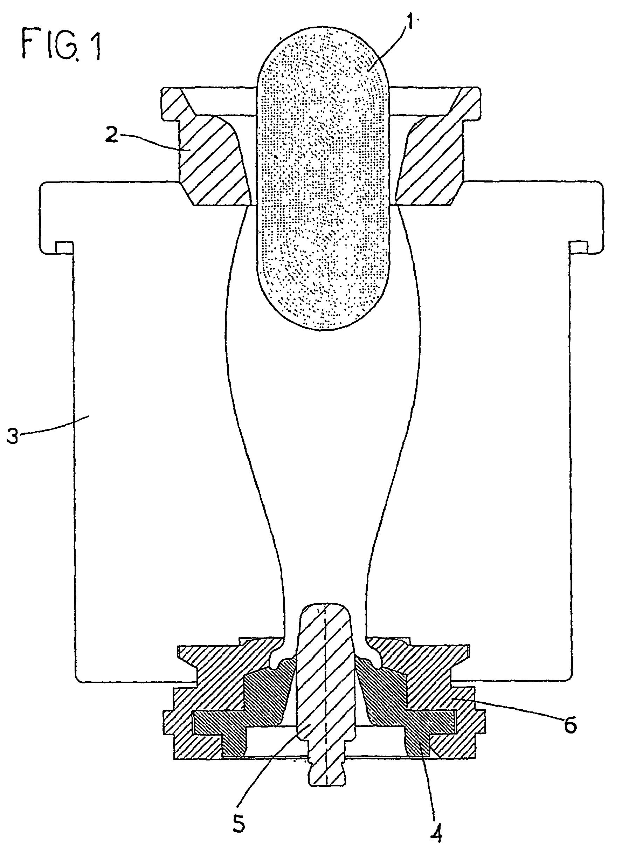

In the first step shown in Figure 1, a gob 1 is inserted, via a funnel 2, into a blank mould 3 which is closed at the bottom by a bottom mould 4 through which a cylinder or plug 5 passes and penetrates over a short distance inside the mould 3. The bottom mould 4 is supported by a movable collar 6, as will be illustrated below. The purpose of the bottom mould 4 is that of pre-forming the neck and the mouth of the article. AMENDED SHEET

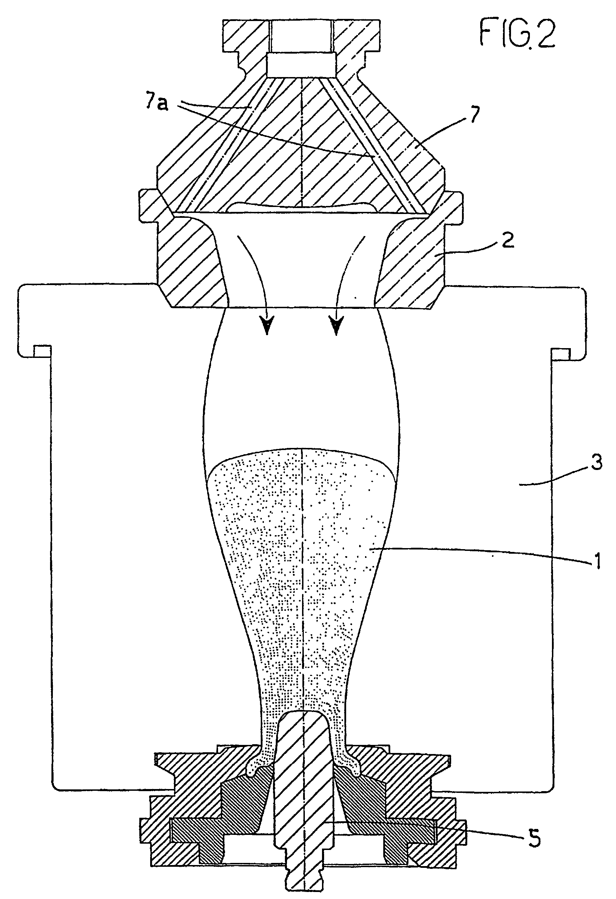

During the second step shown in Figure 2, a buffer-piece 7 is positioned above the funnel said buffer-piece being provided with channels 7a which allow the blowing of air which against the plug 5.

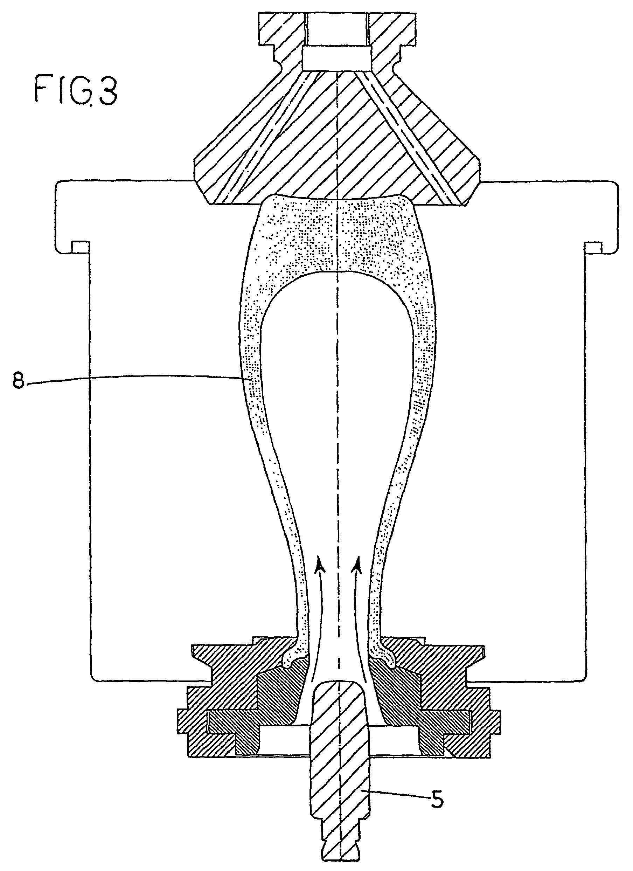

During the third step shown in Figure 3, the funnel 2 is removed and the buffer-piece 7 is positioned against the blank mould in order to seal the cavity of the blank mould itself. At the same time, the plug 5 is lowered so as to allow the introduction of air under pressure which pushes the glass against the blank mould in the top part thereof so as to form a parison 8 which is arranged in an overturned position.

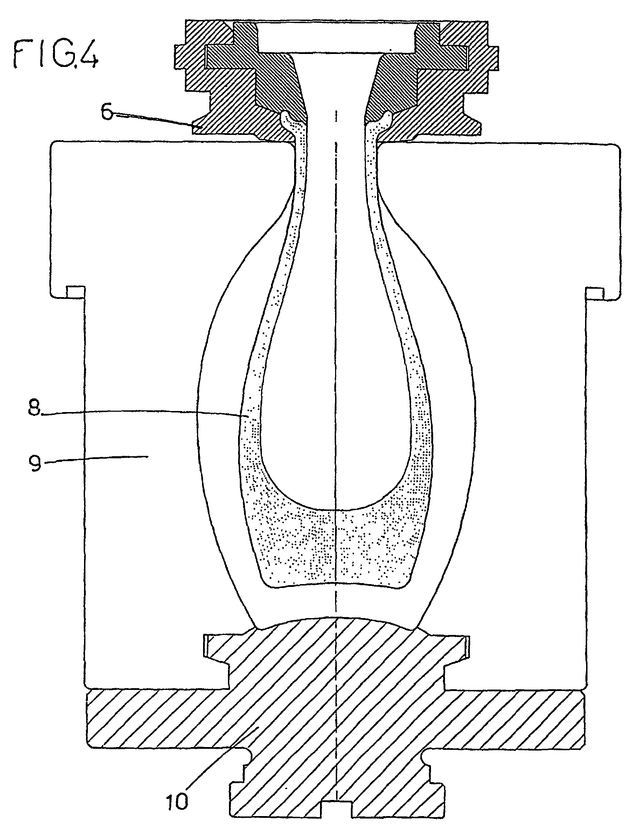

During the fourth step according to Figure 4, the blank mould is opened and the parison 8, which remains gripped between the collar 6 and the bottom mould 4, is overturned through 180°, being positioned between the finishing mould 9 formed by two side shells and a base piece 10.

As soon as the finishing mould has closed, the collar opens, allowing the parison to assume a stable position inside the finishing mould.

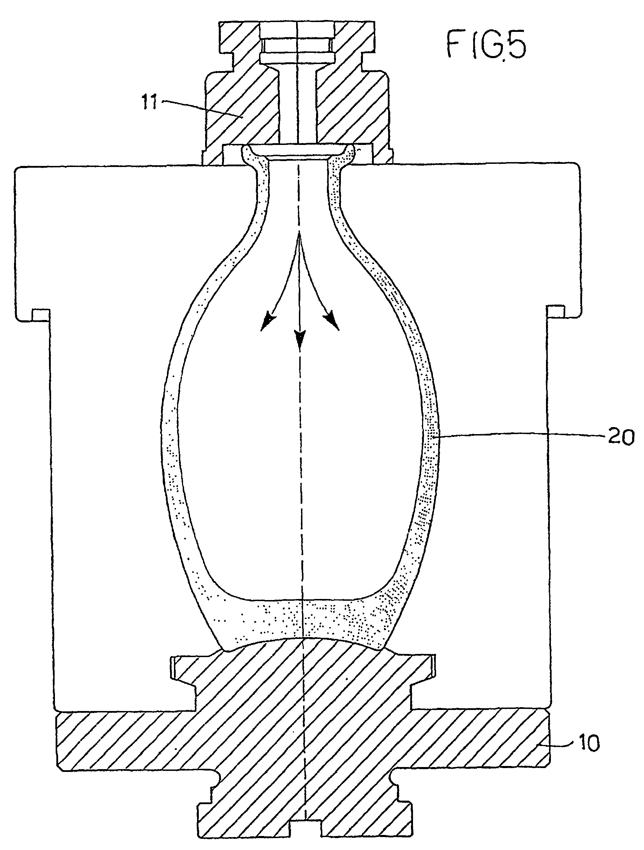

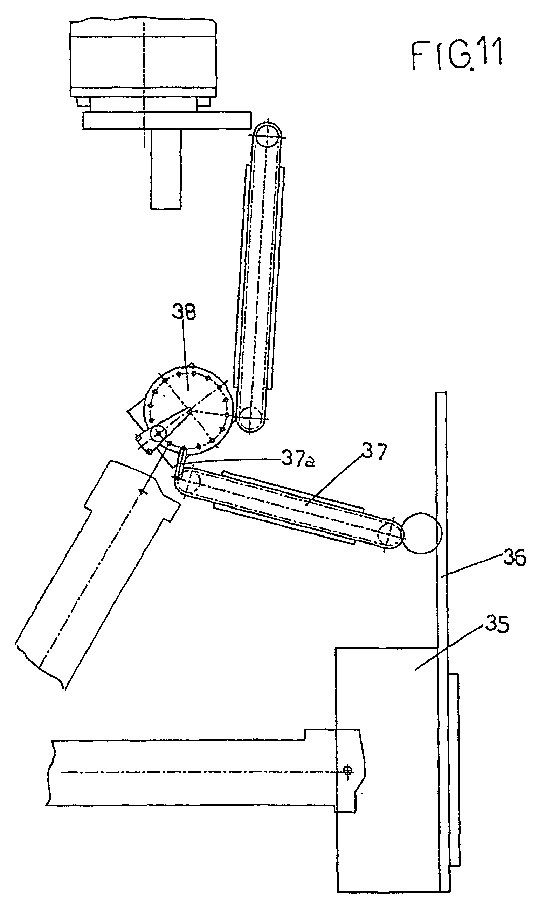

The fifth step according to Figure 5 involves the introduction of compressed air through a blowing head 11 which is positioned, with a certain degree of play with respect to the mouth of the container, above the finishing mould. All these steps belong to the I.S. process and are performed in the machine 35 shown in Fig. 11.

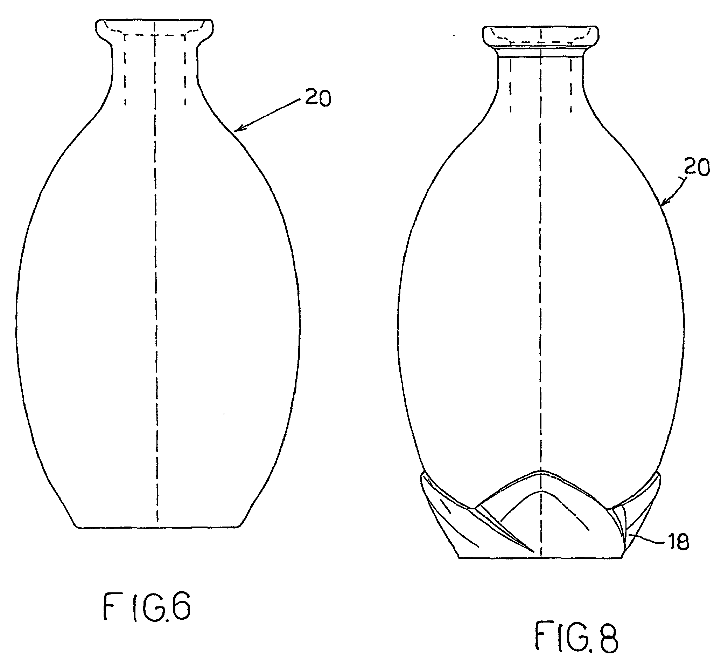

Once the blowing action has terminated, the finishing mould opens, while an extraction member, arriving above the mould, grips the container 20 which has been formed, as illustrated in Figure 6, and transfers it from the machine 35 onto a conveyor belt 36 so as to be transported to a pressing and/or injection machine or station 38 by means of a transferring device 37.

By means of a suitable transferring device 37a and, if necessary, overturning device, the article is introduced into the station for pressing a gob 19 which surrounds externally the whole of the bottom and partly the body of the container, as illustrated in Figure 7. During this step, more precisely, the shaped container is overturned with the mouth directed downwards and resting on a suitable seat 21 which supports and keeps the container centered with respect to a mould 22 which has an incision consisting of a decoration 18 for example in the form of petals as shown in Figure 8 which shows the finished product.

For this purpose, the gob 19 is passed through a collar 23 positioned above the mould 22 and a piston 24 presses the gob into the mould.

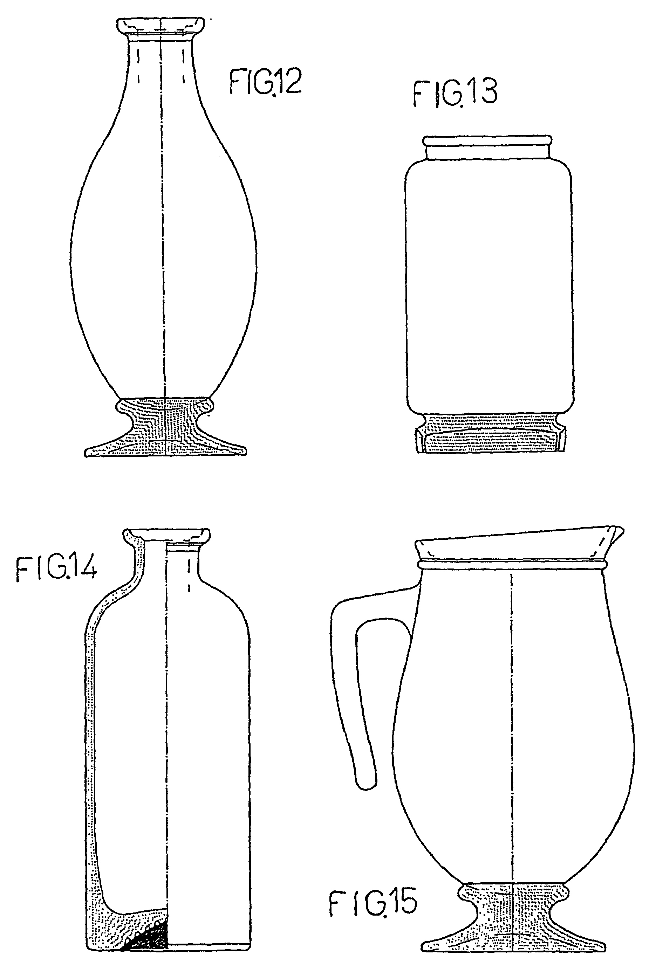

The finished product which is obtained is therefore a container which has a bottom 25 and side walls 26, the bottom being completely or partially surrounded by a decoration 18. Instead of the external decoration it is possible to provide decorations inside the bottom and bases as in Figures 12 to 15.

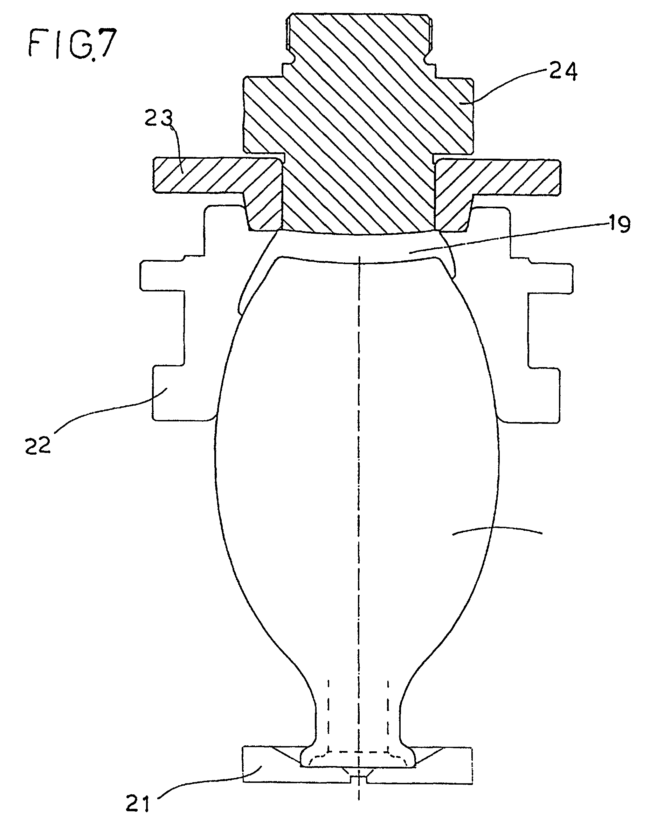

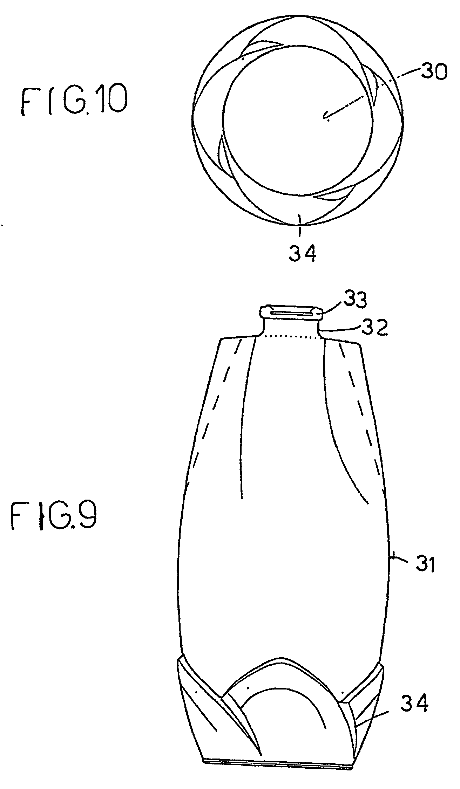

The finished product which is obtained could also have different shapes, for example it could be small bottle for perfume or cream, as shown in Figures 9 and 10, but it again comprises a bottom 30, side walls 31 and a neck 32 which is more or less high and provided with a collar 33 or precision fastening means for a lid or a dispensing pump, not shown.

The finished product also again comprises a base portion 34 which is made of glass and fixed externally to the bottom of the container body.

The glass portion 34 has a decorative effect and therefore could have a colour different from that of the container.

## Claims

1. Method for automatically manufacturing glass containers (20) with feet, bases or other decorative elements (18,34), comprising the following steps:
- forming a parison (8) by blowing or pressing a first gob (1) of molten glass in a blank mould (3) and a finish mould (4), into which finish mould a plunger is able to slide for forming the final mouth or finish of the container (20);
- inverting the parison thus formed and inserting it into a blow mould (10);
- blowing air into the parison so as to cause it to assume its final shape defined by the blow mould;
- transferring the container thus formed in the hot state to a pressing machine by means of a belt or conveyor;
- inverting the container again and positioning it onto a seat (21) which keeps the container centred with respect to a mould (22) which surrounds the bottom of the container externally, said mould having eventually an incision on its inside surface facing the bottom of the container, which incision consists of a decorative design;
- pressing by means of a piston (24) a second gob of glass, which might have a colour different from that of the first gob of glass, directly into the mould (22), which second gob of glass thereby assumes the shape of the cavity formed by the inside surface of the mould (22) itself, the pressing surface of the piston (24) and that portion of the outside surface of the bottom of the container which is enclosed by the mould (22).

2. Apparatus for manufacturing a glass container (20) with feet, bases or other decorative elements (18, 34) comprising:
means (3, 4, 9) for manufacturing a glass container (20);
a seat (21) supporting the glass container (20);
a mould (22) having eventually an incision on its inside surface facing the bottom of the container positioned onto the seat (21) which keeps the container centered with respect to the mould (22);
a piston (24) for pressing a glass gob into a cavity of the mould (22),
**characterized in that** the cavity, in which the glass gob is pressed, is formed by the inside surface of the mould (22), the pressing surface of the piston (24) and the portion of the outside surface of the bottom of the container which is enclosed by the mould (22), and that control means are provided for automatically controlling the operation of the above apparatus parts.

## Patentansprüche

1. Verfahren zur automatischen Herstellung von Glascontainern (20) mit Fuss, Boden oder anderen dekorativen Elementen (18, 34), das folgende Schritte umfasst:
- Formen eines Külbels (8) durch Blasen oder Pressen einer ersten geschmolzenen Glasmasse (1) in einer Vorform (3) und einer Fertigform (4), in welcher Fertigform eine Kolbenstange zum Ausformen der endgültigen Mündung oder zum Fertigstellen des Containers (20) gleitend angeordnet ist;
- Umdrehen des auf diese Weise geformten Külbels und Einbringen desselben in eine Blasform (10);
- Einblasen von Luft in den Külbel, um diesem seine endgültige von der Blasform bestimmte Form zu verleihen;
- Überführen des derart geformten Containers in heissem Zustand in eine Pressmaschine durch ein Transportband oder eine Fördervorrichtung;
- erneutes Umdrehen des Containers und Anordnen desselben in einer den Container gegenüber einer Form (22) zentrierenden Aufnahme (21), welche Form den Boden des Containers aussen umschliesst, wobei die genannte Form gegebenenfalls eine Gravur auf ihrer dem Boden des Containers zugewandten Innenfläche aufweist, welche Gravur aus einer dekorativen Zeichnung besteht;
- Pressen mithilfe eines Kolbens (24) einer zweiten geschmolzenen Glasmasse, deren Farbe sich von der der ersten Glasmasse unterscheiden kann, direkt in die Form (22), wodurch die zweite Glasmasse die Form des Formraums annimmt, der von der Innenfläche der Form (22) selbst, der Pressfläche des Kolbens (24) und dem Bereich der Aussenfläche des Bodens des Containers gebildet wird, der von der Form (22) umschlossen wird.

2. Vorrichtung zum Herstellen eines Glascontainers (20) mit Fuss, Boden odere anderen dekorativen Elementen (18, 34) umfassend:
Mittel (3, 4, 9) zum Herstellen eines Glascontainers (20);
eine Aufnahme (21) zum Stützen des Glascontainers (20);
eine Form (22), die gegebenenfalls auf ihrer dem Boden des in der den Container gegenüber der Form (22) zentrierenden Aufnahme (21) angeordneten Containers zugewandten Innenfläche eine Gravur aufweist,
einen Kolben (24) zum Pressen einer Glasmasse in einen Formraum der Form (22),
**dadurch gekennzeichnet, dass** der Formraum, in den die Glasmasse gepresst wird, durch die Innenfläche der Form (22), die Pressfläche des Kolbens (24) und den Bereich der Aussenfläche des Bodens des Containers gebildet wird, der von der Form (22) umschlossen wird, sowie dadurch, dass Steuermittel zum automatischen Steuern des Betriebes der oben genannten Teile der Vorrichtung vorgesehen sind.

## Revendications

1. Procédé de fabrication automatique de récipients en verre (20) comprenant des pieds, des bases ou d'autres éléments décoratifs (18, 34), comprenant les étapes suivantes:
- formage d'une paraison (8) en soufflant ou pressant une première goutte (1) de verre en fusion dans un moule vide (3) et un moule de finition (4), dans lequel un insert peut glisser pour former le goulot final ou finir le récipient (20);
- inversion de la paraison ainsi formée et insertion de cette dernière dans un moule de soufflage (10) ;
- soufflage d'air dans la paraison de manière à lui faire assumer sa forme finale définie par le moule de soufflage;
- transfert du récipient ainsi formé à l'état plastique vers une machine de pressage au moyen d'un tapis roulant ou convoyeur;
- nouvelle inversion du récipient et positionnement de ce dernier dans un logement (21) qui maintient le récipient centré par rapport à un moule (22) qui entoure extérieurement la base du récipient, ledit moule ayant éventuellement une incision sur sa surface interne faisant face à la base du récipient, laquelle incision consistant en un dessin décoratif;
- compression au moyen d'un piston (24) d'une seconde goutte de verre, pouvant avoir une couleur différente de celle de la première goutte de verre, directement dans le moule (22), laquelle seconde goutte de verre assumant ainsi la forme de la cavité formée par la surface interne du moule (22), la surface de compression du piston (24) et la portion de la surface externe de la base du récipient renfermée dans le moule (22).

2. Appareil de fabrication d'un récipient en verre (20) comprenant un pied, une base ou d'autres éléments décoratifs (18, 34) comprenant:
- des moyens (3, 4, 9) pour fabriquer un récipient en verre (20);
- un logement (21) supportant le récipient en verre (20);
- un moule (22) ayant éventuellement une incision sur sa surface interne faisant face à la base du récipient positionnée dans le logement (21) qui maintient le récipient centré par rapport au moule (22);
- un piston (24) pour compresser une goutte de verre dans une cavité du moule (22),
**caractérisé en ce que** la cavité, dans laquelle la goutte de verre est compressée, est formée par la surface interne du moule (22), la surface de compression du piston (24) et la portion de la surface externe de la base du récipient renfermée dans le moule (22), et **en ce que** des moyens de contrôle sont prévus pour contrôler automatiquement le fonctionnement des parties de l'appareil mentionnées ci-dessus.
